# EUROPÄISCHE PATENTSCHRIFT

(11) **EP 0 943 384 B1**
(45) Veröffentlichungstag und Bekanntmachung des Hinweises auf die Patenterteilung: **14.11.2001**
(21) Anmeldenummer: 99100915.0
(22) Anmeldetag: 20.01.1999
(51) Int. Cl.: B23B 31/16

(54) **Zangenbolzenfutter**
Chuck
Dispositif de serrage

(30) Priorität: 20.03.1998 DE 19812267
(43) Veröffentlichungstag der Anmeldung: 22.09.1999
(73) Patentinhaber: Röhm GmbH, 89567 Sontheim (DE)
(72) Erfinder: Kofler, Martin, 39010 St. Felix (Bozen) (IT)
(74) Vertreter: Hentrich, Swen Dipl.-Phys. Dr.

(56) Entgegenhaltungen:
- EP-A- 0 862 960
- US-A- 3 560 009

## Beschreibung

Die Erfindung betrifft ein Zangenbolzenfutter zum Spannen von Werkstücken auf einer Werkzeugmaschine, mit einer Mehrzahl von gleichmäßig über den Umfang verteilten, geneigt zur Futterachse in Führungsaufnahmen angeordneten Zangenbolzen, die durch eine in axialer Richtung verstellbare Spannplatte in radialer Richtung verstellbar sind (siehe z.B. US-A-3 560 009).

Da bei sich drehenden Werkzeugmaschinen ein zur Drehachse rotationssymmetrisches Arbeitsergebnis erzielt wird, ist es sehr wichtig, daß die Werkstücke genau zentrisch gespannt werden, um eine gleichmäßige und qualitativ hochwertige Bearbeitung zu ermöglichen. Bei verformungsempfindlichen Teilen wie Bremsscheiben, Lagerringen, Zahnkränzen oder dergleichen ist aber weiterhin darauf zu achten, daß bei dem zentrischen Spannen dem Werkstück keine Verformung aufgezwungen wird, die zwar im gespannten Zustand zu einem rotationssymmetrischen Arbeitsergebnis führt, im ausgespannten Zustand nach der Relaxation der Verformung jedoch ein unrundes, nicht rotationssymmetrisch bearbeitetes Werkstück ergibt.

Der Erfindung liegt daher die Aufgabe zugrunde, ein Zangenbolzenfutter der eingangs genannten Art so auszubilden, daß das Werkstück mit ausreichender Spannkraft und exakt zentrisch gespannt werden kann, ohne daß verformungsempfindliche Teile deformiert werden.

Diese Aufgabe wird nach der Erfindung bei einem Zangenbolzenfutter der eingangs genannten Art dadurch gelöst, daß die Zangenbolzen in eine erste Gruppe zentrisch spannender Zangenbolzen und in eine zweite Gruppe ausgleichend spannender Zangenbolzen eingeteilt sind, daß an der Spannplatte starre Führungskolben und axial, parallel zur Futterachse verstellbare bewegliche Führungskolben angeordnet sind, in denen die Führungsaufnahmen für die Zangenbolzen ausgebildet sind, daß die zentrisch spannenden Zangenbolzen der ersten Gruppe den starren Führungskolben und die ausgleichend spannenden Zangenbolzen der zweiten Gruppe den beweglichen Führungskolben zugeordnet sind, und daß die Zangenbolzen der ersten Gruppe gegenüber den Zangenbolzen der zweiten Gruppe radial in Spannrichtung, zum zu spannenden Werkstück hin versetzt angeordnet sind.

Das erfindungsgemäße Zangenbolzenfutter bietet den Vorteil, daß die beim Spannen des Werkstückes auftretenden Anforderungen bezüglich des Vermeidens jeglicher Exzentrizität bzw. der Verformung des Werkstückes sukzessive erfüllt werden, wobei die erste Gruppe Zangenbolzen die zentrische Ausrichtung des Werkstückes bewirkt und sodann bei axialer Verschiebung der beweglichen Führungskolben erst die zurückgesetzten Zangenbolzen der zweiten Gruppe zur Anlage kommen und eine in Umfangsrichtung des Werkstückes gleichmäßigere Einleitung der notwendigen Spannkraft ermöglichen.

Durch die Größe des Neigungswinkels der geneigt zur Futterachse in den Führungsaufnahmen angeordneten Zangenbolzen kann der in radialer Richtung zurückgelegte Verstellweg ebenso wie das Spannkraftverhalten beeinflußt werden, also ob eine Selbstklemmung erzielt wird oder nicht. Dabei hat es sich als günstig erwiesen, wenn die Zangenbolzen der ersten Gruppe um einen dem Produkt des halben Axialhubes des beweglichen Führungskolbens und dem Tangens des Neigungswinkels entsprechenden Betrag zum zu spannenden Werkstück hin versetzt sind.

Da ein Kreis durch drei auf seiner Peripherie liegenden Punkten exakt bestimmt ist, besteht die erste, zum zentrischen Spannen vorgesehene Gruppe zweckmäßigerweise aus drei Zangenbolzen.

Weiter empfiehlt es sich, das Zangenbolzenfutter so auszubilden, daß die zweite Gruppe mehr Zangenbolzen als die erste Gruppe umfaßt, vorzugsweise doppelt so viele. Durch die erhöhte Anzahl von Zangenbolzen in der zweiten Gruppe stehen in Umfangsrichtung des Werkstückes mehr Stützpunkte zum ausgleichenden Spannen zur Verfügung.

Um nach den Zangenbolzen der ersten Gruppe auch die Zangenbolzen der zweiten Gruppe zur Anlage an das Werkstück verstellen zu können, ist vorgesehen, daß jeder bewegliche Führungskolben durch ein wechselweise eine erste Zylinderkammer oder eine zweite Zylinderkammer beaufschlagendes Druckmittel axial, parallel zur Futterachse verstellbar ist. Wenn durch die Verstellung der Spannplatte die Zangenbolzen der ersten Gruppe zum zentrischen Spannen zur Anlage an das Werkstück gebracht sind, wird die erste Zylinderkammer mit dem Druckmittel beaufschlagt, um den beweglichen Führungskolben axial und damit die Zangenbolzen aufgrund ihrer Neigung radial zu verstellen und so das ausgleichende Spannen zu bewirken. Nachdem dies erreicht ist, kann durch weitere axiale Verstellung der Spannplatte und Druckerhöhung in der ersten Zylinderkammer die zum sicheren Spannen erforderliche Spannkraft auf das Werkstück ausgeübt werden.

Da bei der zuvor beschriebenen Erhöhung der Spannkraft keine Verformung des Werkstückes auftreten darf, die Zangenbolzen der zweiten Gruppe sich über ihre Zylinderkammer letztendlich ebenso wie die Zangenbolzen der ersten Gruppe aber über die Spannplatte abstützen, erfordert die Erzeugung der notwendigen Spannkraft über die axiale Verstellung der Spannplatte eine feinfühlige Anpassung des Druckes in der ersten Zylinderkammer. Einfacher und im Rahmen der Erfindung daher bevorzugt ist es, wenn ein Ventil zum Absperren der im ausgleichend gespannten Zustand des Werkstücks mit dem Druckmittel befüllten ersten Zylinderkammer vorgesehen ist. Bei dieser Ausführungsform besteht die Möglichkeit, den Druck in der ersten Zylinderkammer konstant zu halten, so daß bei einer Verstellung der Spannplatte die Zangenbolzen der ersten und der zweiten Gruppe dieselbe Spannkrafterhöhung erfahren.

Eine weitere bevorzugte Ausführungsform ist dadurch gekennzeichnet, daß die beweglichen Führungskolben gegenüber der Spannplatte arretierbar sind. Auch bei dieser Ausführungsform erfahren sämtliche Zangenbolzen bei einer Verstellung der Spannplatte die gleiche Spannkrafterhöhung.

Die Beladung des erfindungsgemäßen Zangenbolzenfutters wird dadurch erleichtert, daß zwischen den Zangenbolzen Anschläge für die Auflage des Werkstücks vorgesehen sind.

Weiterhin ist vorgesehen, daß die Zangenbolzen eine Hinterschneidung aufweisen, die an einer Keilfläche angreift, um bei der radial erfolgenden Verstellung der Zangenbolzen einen Niederzug des Werkstückes zu erreichen, das somit gegen die Anschläge gepreßt wird.

Wenn die Hinterschneidung in einer an der Keilfläche ausgebildeten Nut geführt ist, ist zugleich eine Verdrehsicherung der Zangenbolzen in ihren in den Führungskolben ausgebildeten Führungsaufnahmen erreicht.

Zweckmäßigerweise ist die Hinterschneidung des Zangenbolzens gegen die Kraft eines Federbolzens in der Nut gehalten.

Bisher bekannte Zangenbolzenfutter sind so ausgelegt, daß sie entweder eine Innenspannung oder eine Außenspannung des Werkstückes ermöglichen. Um eine flexiblere Einsatzmöglichkeit des erfindungsgemäßen Zangenbolzenfutters zu erhalten, ist dieses so ausgebildet, daß die starren Führungskolben und die beweglichen Führungskolben um ihre parallel zur Futterachse liegende Achse verdrehbar sind. Durch diese Verdrehbarkeit ergibt sich die Option, die Ausrichtung des Neigungswinkels zu verändern und so festzulegen, ob bei axialer Verstellung der Spannplatte die Zangenbolzen sich radial einwärts oder auswärts bewegen.

Da die Exaktheit der Spannung des Werkstückes und damit dessen Qualität von der exakten Ausrichtung der Führungskolben abhängt, sind jedem Führungskolben zwei gegenüberliegende Rastsitze zugeordnet, durch die die Lage der Führungskolben sowohl bei Innenspannung als auch Außenspannung festgelegt und gegen Verdrehung gesichert ist.

Dabei empfiehlt es sich, daß die Rastsitze in einem Zwischenflansch ausgebildet sind, in den die Führungskolben mit einem Profilvorsprung eingreifen.

Um sowohl bei Innenspannung als auch bei Außenspannung einen Niederzug des Werkstückes zu gewährleisten, sind je Zangenbolzen zwei um 180 versetzte Keilflächen vorgesehen.

Weiterhin ist vorgesehen, daß die Führungskolben bei Außenspannung im Futterkörper paßgenau und in der Spannplatte mit geringem Spiel geführt sind, so daß bei Rotation ein im Sinne einer Spannkraftunterstützung wirkendes Kippmoment auftritt.

Bei dünnwandigen Werkstücken ist es teilweise günstig, wenn die ausgleichend und die zentriert spannenden Zangenbolzen auf unterschiedlichen Seiten des Werkstückes anliegen. Durch die Verdrehbarkeit der Führungskolben ist es nun ermöglicht, daß die starren Führungskolben mit den zentrisch spannenden Zangenbolzen der ersten Gruppe eine die Innenspannung ermöglichende Orientierung aufweisen, und daß die beweglichen Führungskolben mit den ausgleichend spannenden Zangenbolzen eine die Außenspannung ermöglichende Orientierung aufweisen, bzw. daß die starren Führungskolben und die beweglichen Führungskolben eine dazu invertierte Orientierung aufweisen.

Um die geringere Anzahl von Zangenbolzen in der ersten Gruppe gegenüber denen in der zweiten Gruppe auszugleichen und eine größere Anzahl von Stützstellen an Umfang des Werkstückes bereitzustellen, ist vorgesehen, daß an den Zangenbolzen der ersten Gruppe ein dem Werkstück symmetrisch zum Zangenbolzen an zwei Punkten anliegender Ausleger angeordnet ist.

Im folgenden soll die Erfindung an einem in der Zeichnung dargestellten Ausführungsbeispiel näher erläutert werden; es zeigen:
- Fig. 1: einen Längsschnitt durch ein erfindungsgemäßes Zangenbolzenfutter mit einem innengespannten Werkstück,
- Fig. 2: eine Sicht von oben auf das Zangenbolzenfutter gemäß Fig. 1,
- Fig. 3: ein Zangenbolzenfutter in einer der Fig. 1 entsprechenden Darstellung mit einem außengespannten Werkstück,

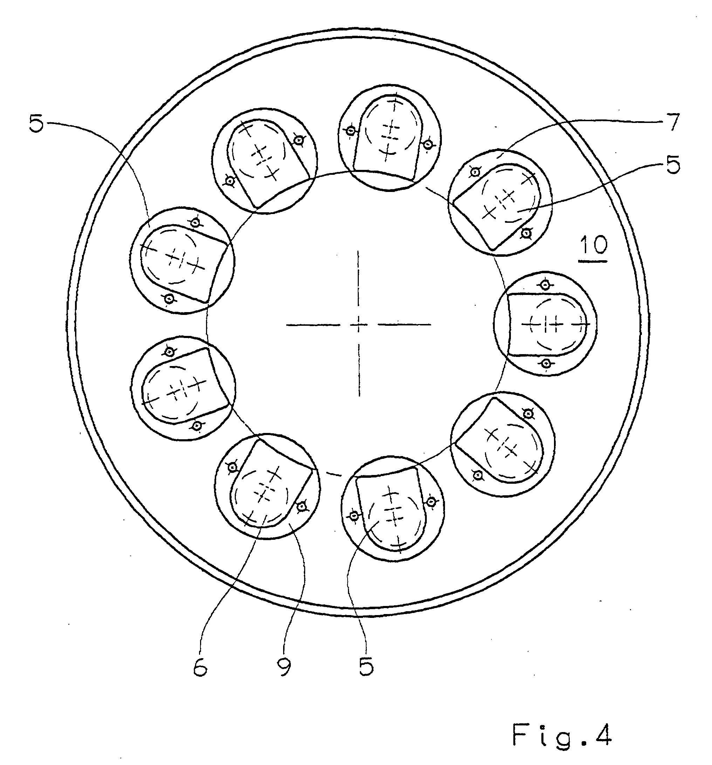

- Fig. 4: eine Sicht von oben auf das Zangenbolzenfutter gemäß Fig. 3,

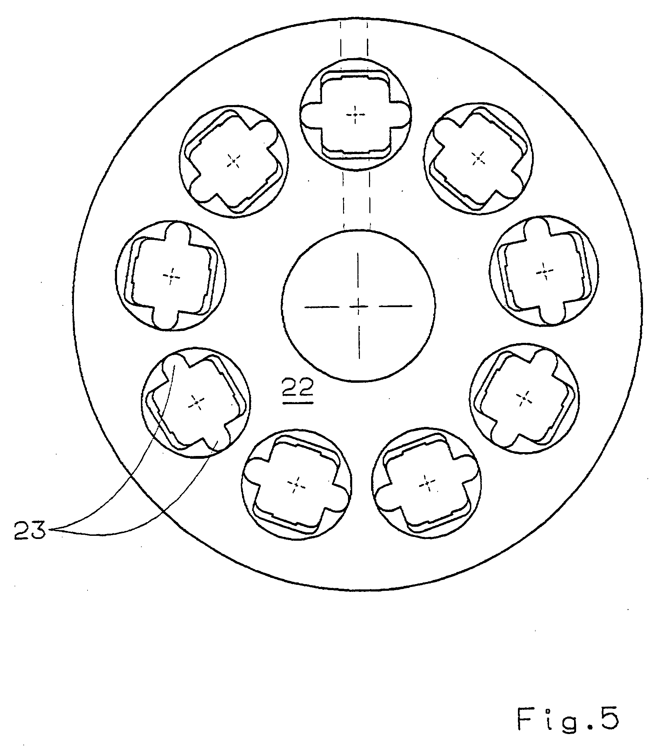

- Fig. 5: der Zwischenflansch mit den darin ausgebildeten Rastsitzen,
- Fig. 6: ein Zangenbolzenfutter in einer der Fig. 1 entsprechenden Darstellung mit einem von innen zentriert und von außen ausgleichend gespannten Werkstück,
- Fig. 7: eine Sicht von oben auf das Zangenbolzenfutter gemäß Fig. 6, und
- Fig. 8: eine der Fig. 7 entsprechenden Darstellung eines gegenüber der Fig. 7 invertiert gespannten Werkstückes.

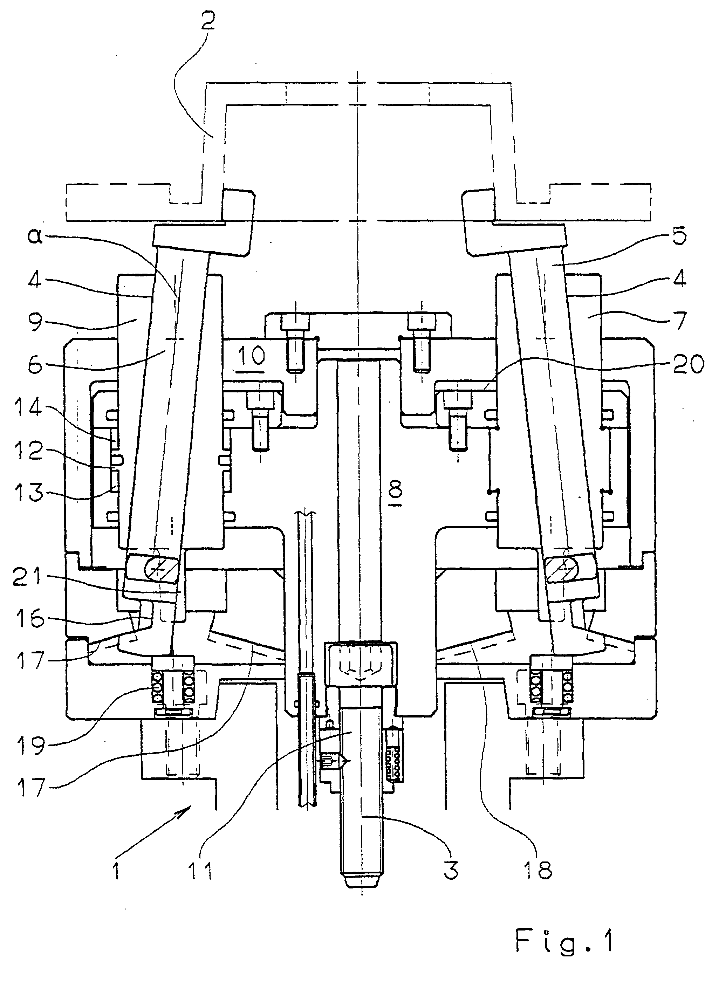

Das in der Zeichnung dargestellte Zangenbolzenfutter 1 dient zum Spannen von verformungsempfindlichen Werkstücken 2 wie beispielsweise Bremsscheiben, Lagerringen, Zahnkränzen oder dergleichen, auf einer Werkzeugmaschine, insbesondere einer hier nicht dargestellten Drehmaschine. Das Zangenbolzenfutter 1 besitzt eine Mehrzahl von gleichmäßig über ihren Umfang verteilt, geneigt zur Futterachse 3 in Führungsaufnahmen 4 angeordneten Zangenbolzen 5,6, wobei die Zangenbolzen 5,6 in zwei Gruppen eingeteilt sind. Die erste Gruppe besteht aus drei Zangenbolzen 5, die dazu dienen, das Werkstück 2 zentrisch zu spannen, während die zweite Gruppe aus sechs Zangenbolzen 6 besteht, mit denen eine ausgleichende, eine Verformung verhindernde Spannung des Werkstückes 2 möglich ist. Die Zangenbolzen 5 der ersten Gruppe sind in starren Führungskolben 7 geführt, die an einer in axialer Richtung verstellbaren Spannplatte 8 fixiert sind. Demgegenüber sind die Zangenbolzen 6 der zweiten Gruppe in beweglichen Führungskolben 9 geführt, die gegenüber der Spannplatte 8 in axialer, parallel zur Futterachse 3 liegender Richtung verstellbar sind. Aufgrund dieses Aufbaus ergibt sich bei in axialer Richtung erfolgender Verstellung der wiederum in einem Futterkörper 10 geführten, durch einen Kolben 11 verstellbaren Spannplatte 8 eine in radialer Richtung erfolgende Verstellung der Zangenbolzen 5,6. Dabei sind die Zangenbolzen 5 der ersten Gruppe gegenüber den Zangenbolzen 6 der zweiten Gruppe radial in Spannrichtung, zum zu spannenden Werkstück 2 hin versetzt angeordnet, und zwar um einen dem Produkt des halben Axialhubes des beweglichen Führungskolbens 9 und dem Tangens des Neigungswinkels 2 entsprechenden Betrag. Somit kommen bei Verstellung der Spannplatte 8 die Zangenbolzen 5 der ersten Gruppe zuerst an dem Werkstück 2 zur Anlage, wobei sie dieses zentrisch spannen. Um auch die Zangenbolzen 6 der zweiten Gruppe zur Anlage an das Werkstück 2 zu bringen, wird der bewegliche Führungskolben 9 in axialer Richtung verstellt, wozu am beweglichen Führungskolben 9 ein Ringbund 12 ausgebildet ist, der eine erste Zylinderkammer 13 von einer zweiten Zylinderkammer 14 trennt, die wechselweise mit einem Druckmittel beaufschlagt werden können. Bei Beaufschlagung der ersten Zylinderkammer 13 mit dem Druckmittel wird der bewegliche Führungskolben 9 in der Zeichnung nach oben verschoben, so daß in Fig. 1 der dem beweglichen Führungskolben 9 zugeordnete Zangenbolzen 6 der zweiten Gruppe radial nach außen zur Anlage an dem Werkstück 2 und zur ausgleichenden Spannung verschoben wird. Damit liegt durch die hubkontrollierte Verschiebung der Spannplatte 8 und nachfolgende Verstellung der beweglichen Führungskolben 9 eine zentrische und ausgleichende, die Form des Werkstückes 2 konservierende Spannung vor, die jedoch nicht die endgültige, zum sicheren Spannen notwendige Spannkraft aufbietet.

Zur Spannkrafterhöhung kann in einfacher Weise die Spannplatte 8 weiter in axialer Richtung verstellt und dazu der Druck in der ersten Zylinderkammer 13 angepaßt werden. Bei einer alternativen, nicht in der Zeichnung dargestellten Ausführungsform ist ein Ventil zum Absperren der ersten Zylinderkammer 13 vorgesehen, so daß die alleinige Verschiebung der Spannplatte 8 ausreicht, um eine gleichmäßige Spannkrafterhöhung über die Zangenbolzen 5,6 der ersten Gruppe und der zweiten Gruppe zu erreichen. Bei einer weiteren Alternative sind die beweglichen Führungkolben 9 gegenüber der Spannplatte 8 arretierbar, um auch so durch alleinige Verstellung der Spannplatte 8 die Spannkrafterhöhung bewirken zu können.

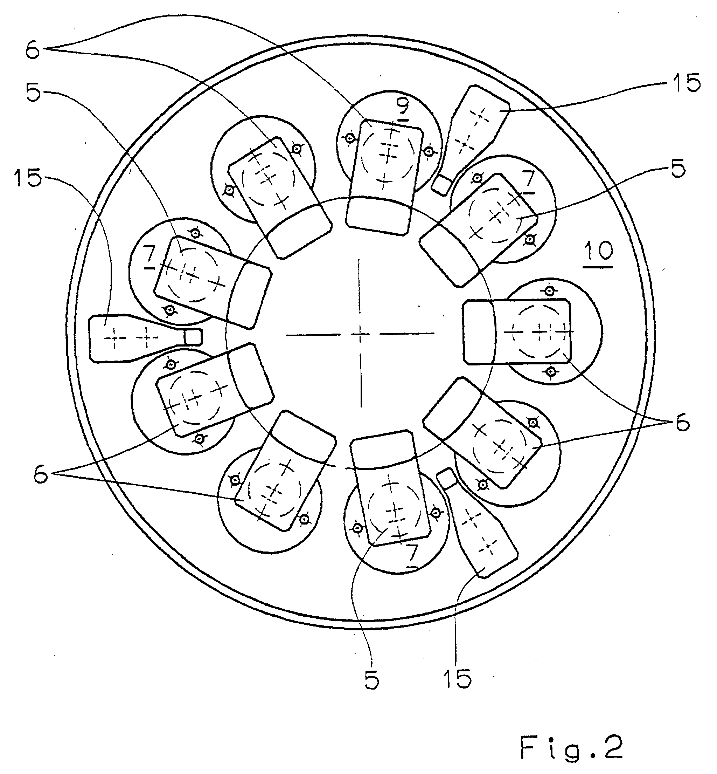

Wie aus Fig. 2 ersichtlich ist, sind drei gleichmäßig über den Umfang verteilt angeordnete Anschläge 15 zwischen den Zangenbolzen 5,6 angeordnet. Die Zangenbolzen 5,6 weisen eine Hinterschneidung 16 auf, die an einer Keilfläche 17 angreift, so daß bei der in radialer Richtung erfolgenden Verstellung der Zangenbolzen 5,6 die Hinterschneidung 16 an der Keilfläche 17 entlang gleitet und so die Zangenbolzen 5,6 in die axial vom Werkstück 2 weggerichtete Richtung gezogen werden, um einen Niederzug mit festem Anpressen des Werkstückes 2 gegen die Anschläge 15 zu erreichen. Die Hinterschneidung 16 ist in einer an der Keilfläche 17 ausgebildeten Nut 18 geführt, wodurch sich eine Verdrehsicherung ergibt. Weiterhin ist die Hinterschneidung 16 des Zangenbolzens 5,6 gegen die Kraft eines Federbolzens 19 in der Nut 18 gehalten.

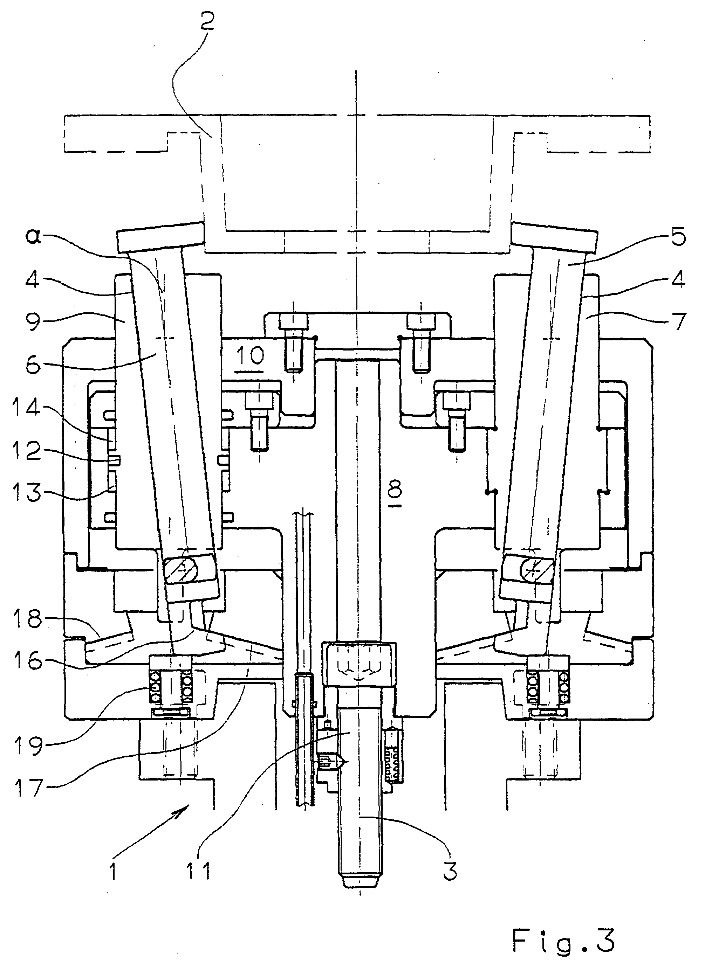

In Fig. 1 ist eine Konfiguration des Zangenbolzenfutters 1 gezeigt, bei dem das Werkstück 2 mit Innenspannung gehalten ist. Demgegenüber zeigt die Fig. 3 eine Konfiguration, bei der eine Außenspannung des Werkstückes 2 vorliegt. Der Übergang zwischen diesen beiden Konfigurationen wird dergestalt erreicht, daß die Spannplatte 8 durch den Kolben 11 ganz nach oben verfahren wird bis die Kante 20 am Futterkörper 10 anschlägt. Der erste Zylinderraum 13 wird beaufschlagt, so daß auch der bewegliche Führungskolben 9 in dieselbe Richtung wie die Spannplatte 8 verstellt ist. Daraufhin werden die Zangenbolzen 5,6 gegen die Kraft des Federbolzens 19 in die entgegengesetzte Richtung gedrückt, bis die Hinterschneidung 16 aus der an der Keilfläche 17 ausgebildeten Nut 18 austreten kann. Anschließend werden die beweglichen Führungskolben 9 und die starren Führungskolben 7, die um ihre parallel zur Futterachse 3 liegende Achse verdrehbar sind, um 180° gedreht, wozu ein an den Führungskolben 7,9 ausgebildeter Profilvorsprung 21 aus einem in einem Zwischenflansch 22 ausgebildeten Rastsitz 23 entnommen und in einen gegenüberliegenden Rastsitz 23 überführt wird. Für die Zangenbolzen 5,6 sind auch zwei um 180° versetzte Keilflächen 17 vorgesehen. Die Hinterschneidung 16 des Zangenbolzens 5,6 wird gegen die Kraft des Federbolzens 19 in die an der zweiten Keilfläche 17 ausgebildeten Nut 18 eingesetzt, woraufhin die zweite Zylinderkammer 14 mit Druck beaufschlagt und die Spannplatte 8 zurückverfahren werden kann, so daß das Zangenbolzenfutter 1 in die Offenstellung überführt ist, aus der ein Werkstück 2 mit Außenspannung gespannt werden kann.

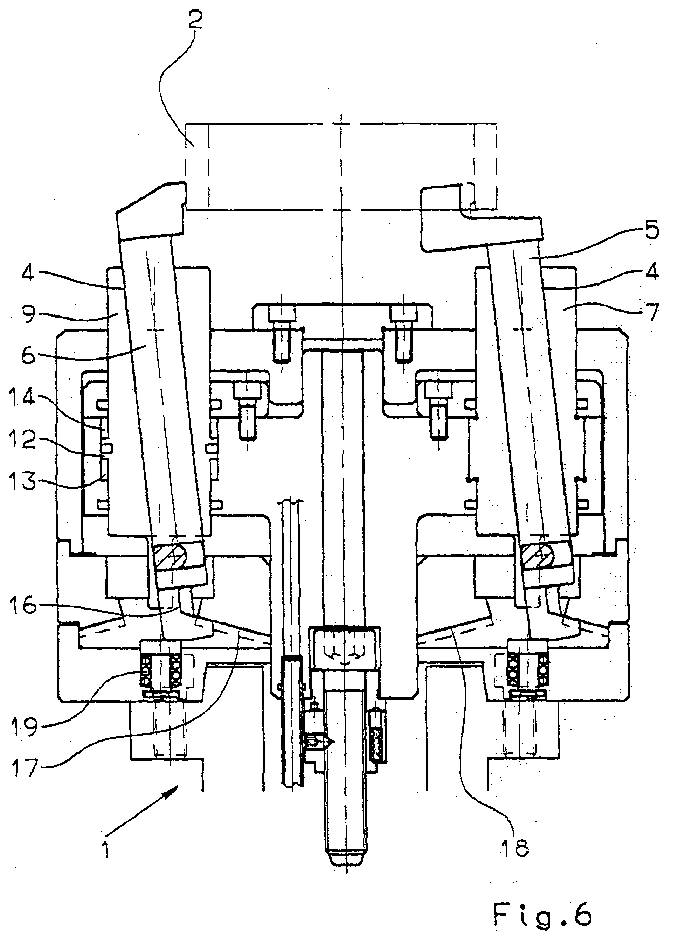

In der Fig. 6-8 ist gezeigt, daß infolge der Verdrehbarkeit der Führungskolben 7, 9 es ermöglicht ist, die Zangenbolzen 5,6 der ersten Gruppe und der zweiten Gruppe auf unterschiedlichen Seiten des Werkstückes 2 angreifen zu lassen, wozu die beweglichen Führungskolben 7 und die starren Führungskolben eine zueinander entgegengesetzte Orientierung aufweisen.

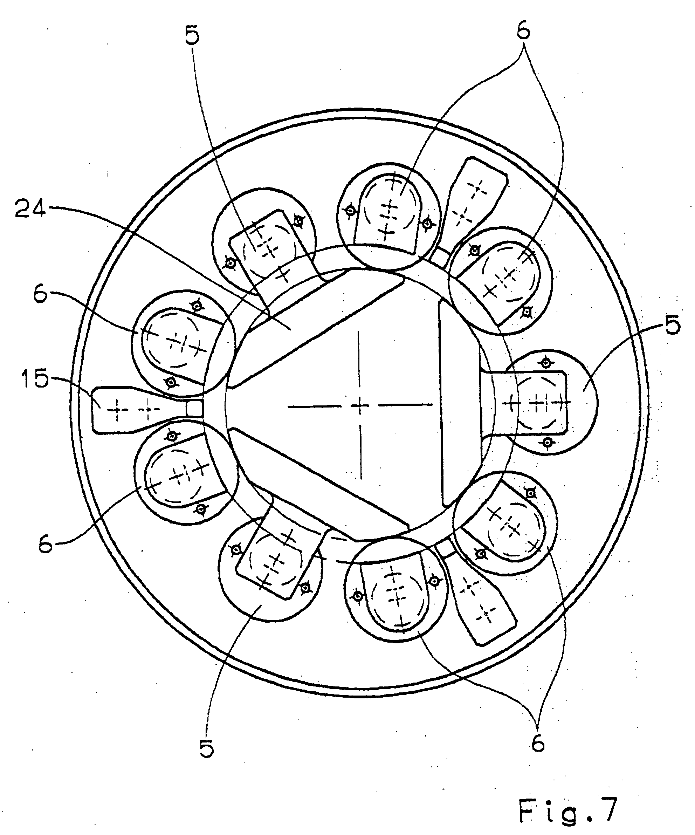

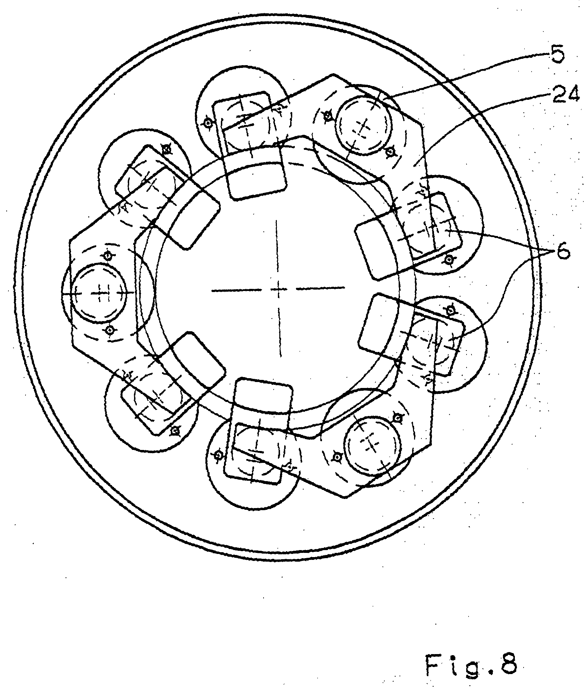

In den Fig. 7 und 8 ist weiterhin gezeigt, daß an den Zangenbolzen 5 der ersten Gruppe ein Ausleger 24 angeordnet ist, der eine erhöhte Anzahl von Stützstellen für die zentrisch spannenden Zangenbolzen 5 am Umfang des Werkstückes 2 bereit stellt.

Die Führungskolben 7,9 sind bei dem in Fig. 3 dargestellten Ausführungsbeispiel mit Außenspannung im Futterkörper 10 paßgenau und in der Spannplatte 8 mit geringem Spiel geführt. Wird das Zangenbolzenfutter 1 in Drehung versetzt, tritt unter der Wirkung der Fliehkraft ein Kippmoment auf, das im Sinne einer Spannkraftunterstützung wirkt.

## Patentansprüche

1. Zangenbolzenfutter zum Spannen von Werkstücken (2) auf einer Werkzeugmaschine, mit einer Mehrzahl von gleichmäßig über den Umfang verteilt, geneigt zur Futterachse (3) in Führungsaufnahmen (4) angeordneten Zangenbolzen (5,6), die durch eine in axialer Richtung verstellbare Spannplatte (8) in radialer Richtung verstellbar sind, **dadurch gekennzeichnet, daß** die Zangenbolzen (5,6) in eine erste Gruppe zentrisch spannender Zangenbolzen (5) und in eine zweite Gruppe ausgleichend spannender Zangenbolzen (6) eingeteilt sind, daß an der Spannplatte (8) starre Führungskolben (7) und axial, parallel zur Futterachse (3) verstellbare bewegliche Führungskolben (9) angeordnet sind, in denen die Führungsaufnahmen (4) für die Zangenbolzen (5,6) ausgebildet sind, daß die zentrisch spannenden Zangenbolzen (5) der ersten Gruppe den starren Führungskolben (7) und die ausgleichend spannenden Zangenbolzen (6) der zweiten Gruppe den beweglichen Führungskolben (9) zugeordnet sind, und daß die Zangenbolzen (5) der ersten Gruppe gegenüber den Zangenbolzen (6) der zweiten Gruppe radial in Spannrichtung, zum zu spannenden Werkstück (2) hin versetzt angeordnet sind.

2. Zangenbolzenfutter nach Anspruch 1, **dadurch gekennzeichnet, daß** die Zangenbolzen (5) der ersten Gruppe um einen dem Produkt des halben Axialhubes des beweglichen Führungskolbens (9) und dem Tangens des Neigungswinkels (2) entsprechenden Betrag zum zu spannenden Werkstück (2) hin versetzt sind.

3. Zangenbolzenfutter der Ansprüche 1 oder 2, **dadurch gekennzeichnet, daß** die erste Gruppe aus 3 Zangenbolzen (5) besteht.

4. Zangenbolzenfutter nach einem der Ansprüche 1 bis 3, **dadurch gekennzeichnet, daß** die zweite Gruppe mehr Zangenbolzen (6) als die erste Gruppe umfaßt, vorzugsweise doppelt so viele.

5. Zangenbolzenfutter nach einem der Ansprüche 1 bis 4, **dadurch gekennzeichnet, daß** jeder bewegliche Führungskolben (9) durch ein wechselweise eine erste Zylinderkammer (14) oder eine zweite Zylinderkammer (13) beaufschlagendes Druckmittel axial, parallel zur Futterachse (3) verstellbar ist.

6. Zangenbolzenfutter nach einem der Ansprüche 2 bis 5, **dadurch gekennzeichnet, daß** ein Ventil zum Absperren der im ausgleichend gespannten Zustand des Werkstücks (2) mit dem Druckmittel befüllten ersten Zylinderkammer (13) vorgesehen ist.

7. Zangenbolzenfutter nach einem der Ansprüche 1 bis 6, **dadurch gekennzeichnet, daß** die beweglichen Führungskolben (9) gegenüber der Spannplatte (8) arretierbar sind.

8. Zangenbolzenfutter nach einem der Ansprüche 1 bis 7, **dadurch gekennzeichnet, daß** zwischen den Zangenbolzen (5,6) Anschläge (15) für die Auflage des Werkstücks (2) vorgesehen sind.

9. Zangenbolzenfutter nach einem der Ansprüche 1 bis 8, **dadurch gekennzeichnet, daß** die Zangenbolzen (5,6) eine Hinterschneidung (16) aufweisen, die an einer Keilfläche (17) angreift, um bei der radial erfolgenden Verstellung der Zangenbolzen (5,6) einen Niederzug des Werkstückes (2) zu erreichen.

10. Zangenbolzenfutter nach Anspruch 9, **dadurch gekennzeichnet, daß** die Hinterschneidung (16) in einer an der Keilfläche (17) ausgebildeten Nut (18) geführt ist.

11. Zangenbolzenfutter nach Anspruch 10, **dadurch gekennzeichnet, daß** die Hinterschneidung (16) des Zangenbolzens (5,6) gegen die Kraft eines Federbolzens (19) in der Nut (18) gehalten ist.

12. Zangenbolzenfutter nach einem der Ansprüche 1 bis 11, **dadurch gekennzeichnet, daß** die starren Führungskolben (7) und die beweglichen Führungskolben (9) um ihre parallel zur Futterachse (3) liegende Achse verdrehbar sind.

13. Zangenbolzenfutter nach Anspruch 12, **dadurch gekennzeichnet, daß** jedem Führungskolben (7,9) zwei gegenüberliegende Rastsitze (23) zugeordnet sind.

14. Zangenbolzenfutter nach Anspruch 13, **dadurch gekennzeichnet, daß** die Rastsitze (23) in einem Zwischenflansch (22) ausgebildet sind, in den die Führungskolben (7,9) mit einem Profilvorsprung (21) eingreifen.

15. Zangenbolzenfutter nach einem der Ansprüche 12 bis 14, **dadurch gekennzeichnet, daß** je Zangenbolzen (5,6) zwei um 180 versetzte Keilflächen (17) vorgesehen sind.

16. Zangenbolzenfutter nach einem der Ansprüche 12 bis 15, **dadurch gekennzeichnet, daß** die Führungskolben (7,9) bei Außenspannung im Futterkörper (10) paßgenau und in der Spannplatte (8) mit geringem Spiel geführt sind, so daß bei Rotation ein im Sinne einer Spannkraftunterstützung wirkendes Kippmoment auftritt.

17. Zangenbolzenfutter nach einem der Ansprüche 12 bis 16, **dadurch gekennzeichnet, daß** die starren Führungskolben (7) mit den zentrisch spannenden Zangenbolzen (5) der ersten Gruppe eine die Innenspannung ermöglichende Orientierung aufweisen, und daß die beweglichen Führungskolben (9) mit den ausgleichend spannenden Zangenbolzen (6) eine die Außenspannung ermöglichende Orientierung aufweisen, bzw. daß die starren Führungskolben (7) und die beweglichen Führungskolben (9) eine dazu invertierte Orientierung aufweisen.

18. Zangenbolzenfutter nach einem der Ansprüche 1 bis 17, **dadurch gekennzeichnet, daß** an den Zangenbolzen (5) der ersten Gruppe ein dem Werkstück (2) symmetrisch zum Zangenbolzen (5) an zwei Punkten anliegender Ausleger (24) angeordnet ist.

## Claims

1. A collet pin chuck for clamping workpieces (2) on a machine tool, comprising a plurality of collet pins (5, 6) which are arranged in guide receiving means (4) inclinedly with respect to the chuck axis (3) distributed uniformly over the periphery and which are displaceable in a radial direction by a clamping plate (8) which is displaceable in the axial direction, **characterised in that** the collet pins (5, 6) are divided into a first group of centrally clamping collet pins (5) and a second group of compensatingly clamping collet pins (6), that arranged on the clamping plate (8) are rigid guide pistons (7) and movable guide pistons (9) which are displaceable axially in parallel relationship with the chuck axis (3) and in which the guide receiving means (4) for the collet pins (5, 6) are provided, that the centrally clamping collet pins (5) of the first group are associated with the rigid guide pistons (7) and the compensatingly clamping collet pins (6) of the second group are associated with the movable guide pistons (9), and that the collet pins (5) of the first group are arranged displaced radially in the clamping direction towards the workpiece (2) to be clamped with respect to the collet pins (6) of the second group.

2. A collet pin chuck according to claim 1 **characterised in that** the collet pins (5) of the first group are displaced towards the workpiece (2) to be clamped by an amount corresponding to the product of half the axial stroke movement of the movable guide piston (9) and the tangent of the angle of inclination (2).

3. A collet pin chuck according to one of claims 1 and 2 **characterised in that** the first group comprises three collet pins (5).

4. A collet pin chuck according to one of claims 1 to 3 **characterised in that** the second group includes more collet pins (6) than the first group, preferably twice as many.

5. A collet pin chuck according to one of claims 1 to 4 **characterised in that** each movable guide piston (9) is displaceable axially in parallel relationship with the chuck axis (3) by a pressure medium which acts alternately on a first cylinder chamber (14) or a second cylinder chamber (13).

6. A collet pin chuck according to one of claims 2 to 5 **characterised in that** there is provided a valve for closing off the first cylinder chamber (13) which in the compensatingly clamped condition of the workpiece (2) is filled with the pressure medium.

7. A collet pin chuck according to one of claims 1 to 6 **characterised in that** the movable guide pistons (9) can be arrested with respect to the clamping plate (8).

8. A collet pin chuck according to one of claims 1 to 7 **characterised in that** provided between the collet pins (5, 6) are abutments (15) for contact with the workpiece (2).

9. A collet pin chuck according to one of claims 1 to 8 **characterised in that** the collet pins (5, 6) have an undercut portion (16) which engages a wedge surface (17) in order to provide that the workpiece (2) is pulled down upon radial displacement of the collet pins (5, 6).

10. A collet pin chuck according to claim 9 **characterised in that** the undercut portion (16) is guided in a groove (14) provided at the wedge surface (17).

11. A collet pin chuck according to claim 10 **characterised in that** the undercut portion (16) of the collet pin (5, 6) is held in the groove (18) against the force of a spring pin (19).

12. A collet pin chuck according to one of claims 1 to 11 **characterised in that** the rigid guide pistons (7) and the movable guide pistons (9) are rotatable about their axis which is parallel to the chuck axis (3).

13. A collet pin chuck according to claim 12 **characterised in that** two oppositely disposed detent seats (23) are associated with each guide piston (7, 9).

14. A collet pin chuck according to claim 13 **characterised in that** the detent seats (23) are formed in an intermediate flange (22) into which the guide pistons (7, 9) engage with a profile projection (21).

15. A collet pin chuck according to one of claims 12 to 14 **characterised in that** there are two wedge surfaces (17) displaced through 180° for each collet pin (5, 6).

16. A collet pin chuck according to one of claims 12 to 15 **characterised in that** in the case of external clamping the guide pistons (7, 9) are guided in the chuck body (10) with a precise fit and in the clamping plate (8) with slight clearance so that upon rotation a tilting moment acting in a manner to assist with the clamping force occurs.

17. A collet pin chuck according to one of claims 12 to 16 **characterised in that** the rigid guide pistons (7) with the centrally clamping collet pins (5) of the first group are of an orientation which permits internal clamping, and that the movable guide pistons (9) with the compensatingly clamping collet pins (6) are of an orientation which permits external clamping, or that the rigid guide pistons (7) and the movable guide pistons (9) are of an orientation which is reversed in relation thereto.

18. A collet pin chuck according to one of claims 1 to 17 **characterised in that** arranged on the collet pins (5) of the first group is a cross bar portion (24) which bears against the workpiece (2) at two points symmetrically with respect to the collet pin (5).

## Revendications

1. Mandrin de serrage à griffes pour le serrage de pièces (2) sur une machine-outil, avec une pluralité de griffes uniformément réparties sur le pourtour, qui sont montées inclinées par rapport à l'axe de mandrin (3) dans des logements de guidage (4) et peuvent être déplacées dans la direction radiale au moyen d'un plateau de serrage (8) déplacé dans la direction axiale, **caractérisé en ce que** les griffes (5, 6) sont divisées en un premier groupe de griffes (5) de serrage-centrage et un second groupe de griffes (6) de serrage-compensation, **en ce que** sur le plateau de serrage (8) sont disposés des pistons de guidage (7) rigides et des pistons de guidage (9) mobiles qui peuvent être déplacés parallèlement à l'axe de mandrin (3) et dans lesquels sont aménagés les logements de guidage (4) pour les griffes (5, 6), **en ce que** les griffes de serrage-centrage (5) du premier groupe sont associées aux pistons de guidage (7) rigides et les griffes de serrage-compensation (7) du second groupe sont associées aux pistons de guidage (9) mobiles, et **en ce que** les griffes (5) du premier groupe, par rapport aux griffes (7) du second groupe, sont décalées radialement dans la direction de serrage en direction de la pièce (2) à serrer.

2. Mandrin de serrage à griffes selon la revendication 1, **caractérisé en ce que** les griffes (5) du premier groupe sont décalées en direction de la pièce (2) à serrer d'une valeur qui correspond au produit de la demi-course axiale du piston de guidage (9) mobile et de la tangente de l'angle d'inclinaison (2).

3. Mandrin de serrage à griffes selon la revendication 1 ou 2, **caractérisé en ce que** le premier groupe est formé de 3 griffes (5).

4. Mandrin de serrage à griffes selon une des revendications 1 à 3, **caractérisé en ce que** le second groupe (6) comprend plus de griffes que le premier groupe, de préférence deux fois plus.

5. Mandrin de serrage à griffes selon une des revendications 1 à 4, **caractérisé en ce que** chaque piston de guidage (9) mobile peut être déplacé axialement, parallèlement à l'axe de mandrin (3), au moyen d'un fluide de pression qui alimente alternativement une première chambre de vérin (14) ou une seconde chambre de vérin (13).

6. Mandrin de serrage à griffes selon une des revendications 2 à 5, **caractérisé en ce qu'**il est prévu une valve pour fermer la première chambre de vérin (14) remplie de fluide de pression dans l'état de serrage avec compensation de la pièce (2).

7. Mandrin de serrage à griffes selon une des revendications 1 à 6, **caractérisé en ce que** les pistons de guidage (9) mobile peuvent être bloqués par rapport au plateau de serrage (8).

8. Mandrin de serrage à griffes selon une des revendications 1 à 7, **caractérisé en ce que** des butées (15) sont prévues entre les griffes (5, 6) pour l'appui de la pièce (2).

9. Mandrin de serrage à griffes selon une des revendications 1 à 8, **caractérisé en ce que** les griffes (5, 6) présente une contre-dépouille (16), qui coopère une surface en coin (17) afin d'obtenir une traction de la pièce (2) vers le bas, lors du déplacement radial des griffes (5, 6).

10. Mandrin de serrage à griffes selon la revendication 9, **caractérisé en ce que** la contre-dépouille (16) est guidée dans une rainure (18) aménagée dans la surface en coin (18).

11. Mandrin de serrage à griffes selon la revendication 10, **caractérisé en ce que** la contre-dépouille (16) de la griffe (5, 6) est maintenue dans la rainure (18) par la force d'un doigt (19) sollicité par ressort.

12. Mandrin de serrage à griffes selon une des revendications 1 à 11, **caractérisé en ce que** les pistons de guidage (7) rigides et les pistons de guidage (9) mobiles peuvent tourner autour de leur axe parallèle à l'axe de mandrin (3).

13. Mandrin de serrage à griffes selon la revendication 12, **caractérisé en ce qu'**à chaque piston de guidage (7, 9) sont associées deux encoches d'encliquetage (23) disposées en vis-à-vis.

14. Mandrin de serrage à griffes selon la revendication 13, **caractérisé en ce que** les encoches d'encliquetage (23) sont aménagées dans une bride intermédiaire (22), dans laquelle les pistons de guidage (7, 9) pénètrent avec une portion saillante (21) profilée.

15. Mandrin de serrage à griffes selon une des revendications 12 à 14, **caractérisé en ce qu'**il est prévu deux surfaces en coin (17) décalées de 180° pour chaque griffe (5, 6).

16. Mandrin de serrage à griffes selon une des revendications 12 à 15, **caractérisé en ce que** les pistons de guidage (7, 9), dans le cas d'une fixation par l'extérieur, sont guidés sans jeu dans le corps de mandrin (10) et avec un faible jeu dans le plateau de serrage (8), de telle sorte qu'un couple agissant dans le sens d'un accroissement de la force de serrage apparaissent lors de la rotation.

17. Mandrin de serrage à griffes selon une des revendications 12 à 16, **caractérisé en ce que** les pistons de guidage (7) rigides avec les griffes de serrage-centrage (5) du premier groupe présentent une orientation permettant le serrage par l'intérieur et **en ce que** les pistons de guidage (9) mobiles avec les griffes de serrage-compensation (6) du second groupe présentent une orientation permettant le serrage par l'extérieur, ou **en ce que** les pistons de guidage (7) rigides et les pistons de guidage (9) mobiles présentent une orientation inverse de la première.

18. Mandrin de serrage à griffes selon une des revendications 1 à 17, **caractérisé en ce qu'**il est prévu sur les griffes (5) du premier groupe, un bras (24) qui s'applique en deux points sur la pièce, de manière symétrique par rapport à la griffe de serrage (5).
